# EUROPEAN PATENT APPLICATION

(11) **EP 4 335 568 A1**
(43) Date of publication of application: **13.03.2024**
(21) Application number: 23188902.3
(22) Date of filing: 01.08.2023
(51) Int. Cl.: B22F 10/25, B22F 10/28, B22F 10/34, B33Y 10/00, B33Y 70/10, B33Y 80/00, C22C 1/05, C22C 1/059, B22F 5/00, B22F 5/04, B22F 10/64, B22F 10/66, B23K 26/342, B33Y 40/20

(54) **BUILD MATERIALS HAVING A POWDER MIXTURE COMPRISING GRAPHENE, METHODS OF PRODUCING ARTICLES THEREFROM, AND ARTICLES PRODUCED THEREWITH**

(30) Priority: 17.08.2022 IN 202211046702; 04.10.2022 US 202217937813
(71) Applicant: Honeywell International Inc., Charlotte, NC 28202 (US)
(72) Inventor: VASISHT, DILIP, Charlotte, 28202 (US); SHARMA, Kedar, Charlotte, 28202 (US); KURLGERI, Riyazahmmad, Charlotte, 28202 (US); GOLLAKOTA, Venkata Sai Manohar, Charlotte, 28202 (US); CHIKKALA, Eswara Naidu, Charlotte, 28202 (US); BAUGHMAN, Brian, Charlotte, 28202 (US); KINGTON, Harry, Charlotte, 28202 (US); MCDONALD, Robert, Charlotte, 28202 (US)
(74) Representative: Lucas, Peter Lawrence

(57) **Abstract**

Methods and build materials are provided for producing articles with additive manufacturing processes. The methods comprise providing a build material comprising a powder mixture of about 95.0 wt.% to about 99.95 wt.% metallic powder and about 0.05 wt.% to about 5.0 wt.% graphene powder and performing an additive manufacturing process to produce the article from the build material. The graphene powder comprises nanoplatelets having between 1 and 30 layers of graphene.

## Description

### CROSS-REFERENCE TO RELATED APPLICATION

This application claims priority to India Provisional Patent Application No. 202211046702, filed August 17, 2022, the entire content of which is incorporated by reference herein.

### TECHNICAL FIELD

The present invention generally relates to additive manufacturing technologies. More particularly, the present disclosure relates to build materials for use in additive manufacturing processes that include graphene for improved material properties.

### BACKGROUND

Components with relatively complex three-dimensional (3D) geometries may raise difficult fabrication issues. Conventional fabrication techniques include forging, casting, and/or machining. Such conventional methods are not only expensive and have long lead times but may additionally have low yields. Development time and cost for certain components may also be magnified because such components generally require several iterations, including iterations as a result of intentional design decisions.

Additive manufacturing (AM) processes, such as laser powder bed fusion (LPBF), have recently come to prominence as a cost-effective alternative to traditional manufacturing techniques. Additive manufacturing is defined by the American Society for Testing and Materials (ASTM) as the "process of joining materials to make objects from 3D model data, usually layer upon layer, as opposed to subtractive manufacturing methodologies, such as traditional machining and casting." In an additive-manufacturing process, a model, such as a design model, of the component may be defined in any suitable manner. For example, the model may be designed with computer aided design (CAD) software. The model may include 3D numeric coordinates of the entire configuration of the component including both external and internal surfaces. The model may include several successive two-dimensional (2D) cross-sectional slices that together form the 3D component.

Components manufactured from additive manufacturing processes may have significant surface roughness, surface porosity, and cracks (hereinafter "surface-connected defects"), and internal porosity and cracks (hereinafter "internal defects"). The term "internal defects" also includes bond failures and cracks at the interfaces between successive cross-sectional deposit layers. Cracks may develop at these interfaces or cut through or across deposit layers dues to stresses inherent with the additive manufacturing process and/or the metallurgy of the build material. Both the surface-connected defects and the internal defects (collectively referred to hereinafter as "additive manufacturing (AM) defects") can negatively affect, for example, the structural integrity, cosmetic appearance, functionality, mechanical properties, and fatigue life/strength of the component.

Certain hot isostatic pressing (HIP) processes may be used to reduce the AM defects of as-built articles. For components needing HIP because of the presence of the surface-connected defects, an encapsulation process may be used to bridge and cover the surface-connected defects, effectively converting the surface-connected defects into internal defects in preparation for subsequent HIP processing. However, HIP processes can be time consuming and expensive, and may not be commercially available in certain geographic regions.

Accordingly, it is desirable to provide improved additive manufacturing techniques that are capable of producing components with improved structural integrity, cosmetic appearance, functionality, mechanical properties, and/or fatigue life/strength. Furthermore, other desirable features and characteristics of the present invention will become apparent from the subsequent detailed description of the invention and the appended claims, taken in conjunction with the accompanying drawings and this background of the invention.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for producing an article. The method comprises providing a build material comprising a powder mixture of about 95.0 wt.% to about 99.95 wt.% metallic powder and about 0.05 wt.% to about 5.0 wt.% graphene powder and performing an additive manufacturing process to produce the article from the build material. The graphene powder comprises nanoplatelets having between 1 and 30 layers of graphene.

An article is provided. The article is produced by a method comprising the steps of providing a build material comprising a powder mixture of about 95.0 wt.% to about 99.95 wt.% metallic powder and about 0.05 wt.% to about 5.0 wt.% graphene powder and performing an additive manufacturing process to produce the article from the build material. The graphene powder comprises nanoplatelets having between 1 and 30 layers of graphene.

A build material is provided for use in an additive manufacturing process. The build material comprises a powder mixture of about 95.0 wt.% to about 99.95 wt.% metallic powder and about 0.05 wt.% to about 5.0 wt.% graphene powder. The graphene powder comprises nanoplatelets having between 1 and 30 layers.

Furthermore, other desirable features and characteristics of the method, article, and build material will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a flowchart illustrating a method for manufacturing an article using additive manufacturing (AM) techniques in accordance with an exemplary embodiment;
FIG. 2 is a schematic view of an exemplary AM system for manufacturing the article in accordance with an exemplary embodiment;
FIG. 3 includes images representing microscopic surfaces of articles manufactured using AM techniques with metallic powders that did not include a graphene additive (left) and that did include a graphene additive (right);

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to methods for manufacturing components from articles formed by an additive manufacturing process. As used herein, the term additive manufacturing refers to any process wherein thin successive layers of material are laid down atop one another to form an article. Additive manufacturing processes can be used to produce articles of manufacture having complex geometries in a single operation with no tooling. Additive manufacturing technology allows for the article to be produced at a net-shape or near-net shape without the application of the heating, casting, or forging processes commonly used in the prior art.

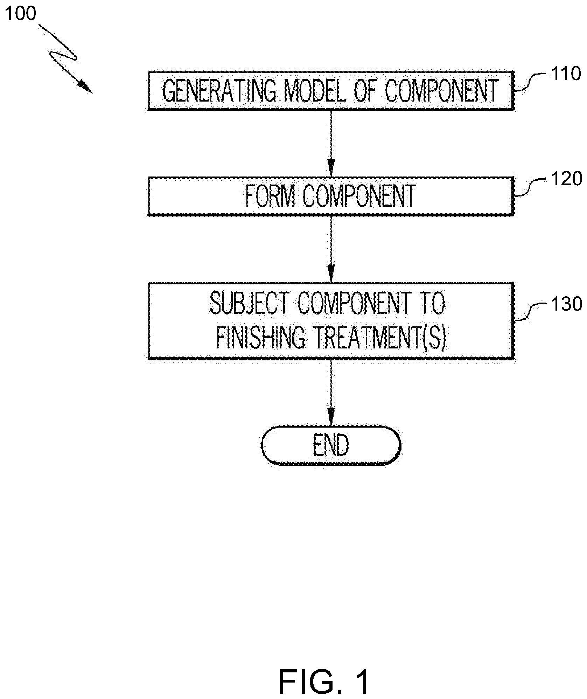

FIG. 1 is a flowchart illustrating a nonlimiting method 100 for manufacturing the article using additive manufacturing techniques. In a first step 110, a model, such as a design model of the article may be defined in any suitable manner. For example, the model may be designed with computer aided design (CAD) software and may include three-dimensional ("3D") numeric coordinates of the entire configuration of the component including both external and internal surfaces. In one exemplary embodiment, the model may include several successive two-dimensional ("2D") cross-sectional slices that together form the 3D component.

In step 120 of the method 100, the article is formed according to the model of step 110. In one exemplary embodiment, the entire component is formed using a rapid prototyping or additive layer manufacturing process, such as laser powder bed fusion (L-PBF). Some examples of additive layer manufacturing processes include selective laser sintering (SLS) in which a laser is used to sinter a powder media in precisely controlled locations; selective laser melting (SLM) in which a laser is used to melt a powder media in precisely controlled locations, laser metal deposition with wire (LMDW) in which a wire feedstock is melted by a laser and then deposited and solidified in precise locations to build the product; electron beam melting (EBM) in which an electron beam is used to melt a powder media; laser powder forming in which a powder media is injected into a molten pool produced by a laser; direct metal laser melting (DMLM) in which a laser is used to melt thin layers of a powder media, direct metal laser sintering (DMLS) in which a laser is used to sinter thin layers of a powder media. Other additive manufacturing processes may also be employed. In general, additive manufacturing techniques provide flexibility in free-form fabrication without geometric constraints, fast material processing time, and innovative joining techniques. In one particular exemplary embodiment, L-PBF is used to produce the article in step 120. L-PBF is a commercially available, laser-based rapid prototyping and tooling process by which complex parts may be directly produced by precision melting and solidification of metal powder into successive layers of larger structures, each layer corresponding to a cross-sectional layer of the 3D component.

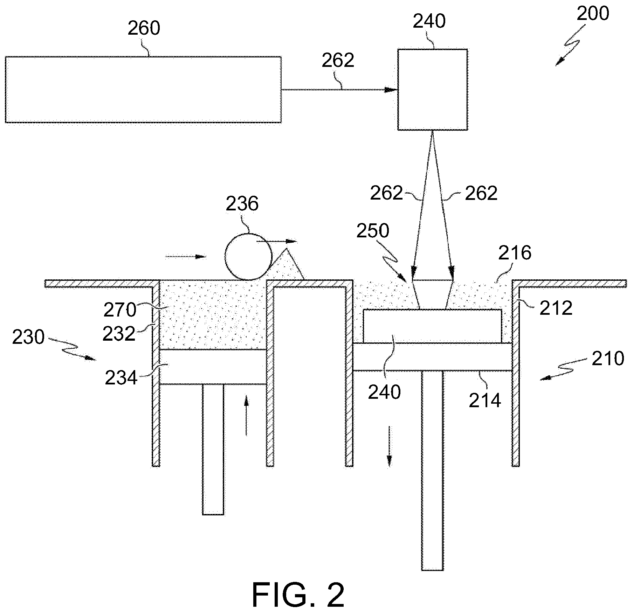

As such, in one exemplary embodiment, step 120 is performed with L-PBF techniques to form the article. However, prior to a discussion of the subsequent method steps, reference is made to FIG. 2, which is a schematic view of an L-PBF system 200 for manufacturing the article in accordance with an exemplary embodiment.

Referring to FIG. 2, the system 200 includes a fabrication device 210, a powder delivery device 230, a scanner 240, and a laser 260 that function to manufacture the article 250 (e.g., the article) with build material 270. The fabrication device 210 includes a build container 212 with a fabrication support 214 on which the article 250 is formed and supported. The fabrication support 214 is movable within the build container 212 in a vertical direction and is adjusted in such a way to define a working plane 216. The delivery device 230 includes a powder chamber 232 with a delivery support 234 that supports the build material 270 and is also movable in the vertical direction. The delivery device 230 further includes a roller or wiper 236 that transfers build material 270 from the delivery device 230 to the fabrication device 210.

During operation, a base block may be installed on the fabrication support 214. The fabrication support 214 is lowered and the delivery support 234 is raised. The roller or wiper 236 scrapes or otherwise pushes a portion of the build material 270 from the delivery device 230 to form the working plane 216 in the fabrication device 210. The laser 260 emits a laser beam 262, which is directed by the scanner 240 onto the build material 270 in the working plane 216 to selectively fuse the build material 270 into a cross-sectional layer of the article 250 according to the design. More specifically, the speed, position, and other operating parameters of the laser beam 262 are controlled to selectively fuse the powder of the build material 270 into larger structures by rapidly melting the powder particles that may melt or diffuse into the solid structure below, and subsequently, cool and re-solidify. As such, based on the control of the laser beam 262, each layer of build material 270 may include unfused and fused build material 270 that respectively corresponds to the cross-sectional passages and walls that form the article 250. In general, the laser beam 262 is relatively low power to selectively fuse the individual layer of build material 270. As an example, the laser beam 262 may have a power of approximately 50 to 500 Watts, although any suitable power may be provided.

Upon completion of a respective layer, the fabrication support 214 is lowered and the delivery support 234 is raised. Typically, the fabrication support 214, and thus the article 250, does not move in a horizontal plane during this step. The roller or wiper 236 again pushes a portion of the build material 270 from the delivery device 230 to form an additional layer of build material 270 on the working plane 216 of the fabrication device 210. The laser beam 262 is movably supported relative to the article 250 and is again controlled to selectively form another cross-sectional layer. As such, the article 250 is positioned in a bed of build material 270 as the successive layers are formed such that the unfused and fused material supports subsequent layers. This process is continued according to the modeled design as successive cross-sectional layers are formed into the completed desired portion, e.g., the component of step 120.

The delivery of build material 270 and movement of the article 250 in the vertical direction are relatively constant and only the movement of the laser beam 262 is selectively controlled to provide a simpler and more precise implementation. The localized fusing of the build material 270 enables more precise placement of fused material to reduce or eliminate the occurrence of over-deposition of material and excessive energy or heat, which may otherwise result in cracking or distortion. The unused and unfused build material 270 may be reused, thereby further reducing scrap. Any suitable laser and laser parameters may be used, including considerations with respect to power, laser beam spot size, and scanning velocity.

The build material 270 includes a metallic alloy in powder form (referred to hereinafter as the metallic powder) and graphene in powder form (referred to hereinafter as the graphene powder). In some examples, the build material 270 may comprise a mixture of about 95.0 wt.% to about 99.95 wt.% of the metallic powder and about 0.05 wt.% to about 5.0 wt.% of the graphene powder, such as about 0.1 wt.% to about 4.5 wt.% of the graphene powder, about 0.15 wt.% to about 4.0 wt.% of the graphene powder, about 0.2 wt.% to about 3.5 wt.% of the graphene powder, or about 0.25 wt.% to about 3.0 wt.% of the graphene powder. In other examples, the build material may consist essentially of a mixture of about 95.0 wt.% to about 99.95 wt.% of the metallic powder, about 0.05 wt.% to about 5.0 wt.% of the graphene powder, and the balance incidental impurities. The build material may have a substantially uniform distribution of the metallic powder and the graphene powder.

As used herein, the term "metallic alloy" refers to any alloy wherein a specific or individual metallic material is the single greatest constituent thereof, as measured on a weight percentage basis. For example, an "aluminum alloy" may include the class of alloys where aluminum consists of a majority of the alloy, as measured on a weight percentage basis. Non-limiting examples of such metallic alloys include aluminum alloys, nickel alloys, and iron alloys.

Some specific nonlimiting examples of aluminum alloys include the following cast and wrought alloys. Cast alloys like 201 from the difficult to cast 200 series, or 355, 356, or 357 from the 300 series may be employed. Wrought alloys like 6061 from the weldable 6000 series or 7075 from the high-strength 7000 series may be utilized. Other alloys may also be employed as are well-known to those having ordinary skill in the art, such as the utilization of aluminum alloy 8009 in additive manufacturing applications. Conventional cast or wrought aluminum alloys may be modified and optimized for additive manufacturing.

Some specific nonlimiting examples of nickel alloys include the following cast and wrought alloys. Cast alloys like Udimet^{®} 500, Inconel^{®} 713 LC, Renè^{®} 77, IN 100, Renè^{®} 80, MAR-M-246, IN 738 LC, MAR-M-247, MAR-M-002, Renè^{®} 125, and GTD^{®} 111 may be employed. Wrought alloys like Inconel^{®} X-750, Nimonic^{®} 105, Udimet^{®} 500, Inconel^{®} 700, Nimonic^{®} 115, Udimet^{®} 520, Udimet^{®} 710, and Udimet^{®} 720 may be utilized. Other alloys may also be employed as are well-known to those having ordinary skill in the art, such as the utilization of IN 939, GTD^{®} 222, Inconel^{®} 188, Inconel^{®} 230, Inconel^{®} 600, Inconel^{®} 601, Inconel^{®} 713C, Inconel^{®} 718, Inconel^{®} 792, Nimonic^{®} 75, Nimonic^{®} 80A, Nimonic^{®} 90, Nimonic^{®} 263, Haynes^{®} 75, Haynes^{®} 263, Renè^{®} 41, Renè^{®} 100, and Renè^{®} 150. Conventional cast or wrought nickel alloys may be modified and optimized for additive manufacturing.

Some specific nonlimiting examples of iron alloys include the following cast and wrought alloys. Incoloy^{®} 800, Incoloy^{®} 800H, Incoloy^{®} 825, and Incoloy^{®} A-286 may be employed. Conventional cast or wrought nickel alloys may be modified and optimized for additive manufacturing.

The rapid solidification rates at which these metallic alloys are deposited, layer-by-layer, allow for the creation of unique microstructures using various additive elements that could not be realized using ordinary cast/wrought alloy techniques. For purposes of this disclosure, this newer class of metallic alloys will be referred to as "non-conventional" metallic alloys. An exemplary, a class of non-conventional metallic alloys includes those known as "rapidly solidified powder aluminum alloys", such as 7090 and 7091.

In general, the metallic alloy may be selected based on one or more of strength, durability, and useful life, particularly at high temperatures, although it should be appreciated that the metallic alloy may also be selected based on the intended function of the article being formed. The metallic powder is preferably substantially uniform in quality, condition, and free from foreign materials and imperfections detrimental to usage of the article formed therefrom.

The metallic powder may have various maximum particle sizes, that is, a largest dimension of the particles, and particle size distributions. In some examples, the metallic powder has a maximum particle size of less than or equal to 90 microns, less than or equal to 70 microns, less than or equal to 60 microns, less than or equal to 50 microns, less than or equal to 40 microns, less than or equal to 30 microns, or less than or equal to 20 microns. In some examples, the metallic powder may have an apparent density of about 5 g/cc.

The powdered form of the metal alloy may be produced by combining the various constituents (metals and other elements) of the metal alloy into a mixture, melting the mixture, and atomizing the melted mixture to form a powder, a process which is well-known in the art.

In some examples, the graphene powder may have a composition comprising about 92 wt.% to about 100 wt.% carbon. In other examples, the graphene powder may have a composition comprising about 92 wt.% to about 100 wt.% carbon, up to about 8.0 wt.% oxygen, up to about 0.2 wt.% sulfur, up to about 0.2 wt.% nitrogen, and up to about 0.2 wt.% silicon. In yet other examples, the graphene powder may have a composition consisting essentially of about 92 wt.% to about 100 wt.% carbon, up to about 8.0 wt.% oxygen, up to about 0.2 wt.% sulfur, up to about 0.2 wt.% nitrogen, up to about 0.2 wt.% silicon, and the balance incidental impurities. The graphene powder is preferably substantially uniform in quality, condition, and free from foreign materials and imperfections detrimental to usage of the article formed therefrom.

The graphene powder may include particles having structures with microscale or nanoscale dimensions. As used herein, nanoscale or nanoscopic scale structures are defined as structures having at least one dimension of about 0.1 to 100 nanometers, and microscale or microscopic scale structures are defined as structures having at least one dimension of about 0.1 to 100 micrometers. In some embodiments, the particles may include two-dimensional (2D) structures, that is, structures having one dimension (thickness) being nanoscale and other dimensions being greater than nanoscale (e.g., nanosheets, nanoplatelets, nanoscale thin-films, and nanomembranes). In some embodiments, the particles may include microscale three-dimensional (3D) materials, that is, structures having all dimensions being microscale. In some embodiments, the particles may include graphite-like structures (e.g., flakes).

The graphene powder may have various maximum particle sizes, that is, a largest dimension of the particles, and particle size distributions. In some examples, the graphene powder has a maximum particle size of equal to or less than 150 microns, less than or equal to 100 microns, less than or equal to 90 microns, less than or equal to 80 microns, less than or equal to 70 microns, less than or equal to 60 microns, less than or equal to 50 microns, less than or equal to 40 microns, less than or equal to 30 microns, or less than or equal to 20 microns. In one example, the graphene powder has a particle size distribution of D50% of 40 ± 10 microns and D90% of 70 ± 10 microns, as measured in accordance with ASTM B822. In some examples, the graphene powder may have an apparent density of less than 0.01 g/cc.

The particles may have various quantities and distributions of the number of layers of graphene in the particles. For example, the particles may have greater than 100 layers of graphene, up to 100 layers of graphene, up to 90 layers of graphene, up to 80 layers of graphene, up to 70 layers of graphene, up to 60 layers of graphene, up to 50 layers of graphene, up to 40 layers of graphene, up to 30 layers of graphene, or up to 20 layers of graphene.

In more specific but nonlimiting examples, the graphene powder may include graphite-like structures having greater than 100 layers of graphene. In other examples, the graphene powder may include nanoplatelets having up to 100 layers of graphene, between 1 and 30 layers of graphene, or between 1 and 20 layers of graphene (e.g., 15 to 20 layers). In yet other embodiments, the graphene powder may include nanosheets having a monolayer of graphene. In yet other examples, the graphene powder may include nanoplatelets wherein a majority of the nanoplatelets have more than one layer of graphene, that is, two or more layers of graphene. In some examples, the graphene powder is substantially free of graphene oxide and/or graphite.

The build material 270 may be prepared by a method that includes mixing the metallic powder, the graphene powder, and a dispersing agent (e.g., acetone) to form a powder mixture, and then drying the powder mixture to form the build material 270.

Returning to FIG. 1, at the completion of step 120, the article may be given a stress relief treatment, and then removed from the additive manufacturing system (e.g., from the L-PBF system 200). At this stage, the article may have significant surface roughness caused, for example, by partial fusion or entrainment of metallic powder as the laser starts or stops its traverse or sweep at the edges of each deposit layer, and by contamination, debris, oxidation, or the like. To address some of these concerns, the component formed in step 120 may undergo finishing treatments in optional step 130. Finishing treatments may include, for example, machining, various surface preparation techniques, and/or the application of coatings. If necessary, the component may be machined to final specifications. The article, produced using additive manufacturing techniques, has a layer-by-layer fused microstructure that exhibits anisotropic mechanical and physical properties. It should be noted that these "finishing treatments" of optional step 130, if present, are performed separately from and in addition to any plating, diffusing, stripping, and HIP procedures.

According to exemplary embodiments as described herein, in a method for manufacturing a component, an additive manufacturing process may be performed to produce the component using a build material in powder form having a mixture of the metallic powder and a graphene powder. Inclusion of the graphene powder may affect certain material and/or mechanical properties of the component. For example, the build material comprising the graphene powder may result in the component having increased tensile strength, strain, fatigue life, and/or creep life relative to another build material having a substantially identical composition to the build material but without the graphene powder, that is, only including the metallic powder. In some examples, the resulting component may have certain material and/or mechanical properties that are improved relative to components produced by conventional fabrication techniques including forging, casting, and/or machining.

The additive manufacturing process may include various additive manufacturing techniques including those described previously. In one example, the additive manufacturing process includes a powder bed fusion process. Due to the improved mechanical and/or material properties of the component formed by the additive manufacturing process, in certain examples a hot isostatic pressing (HIP) process is not performed on the article prior to use thereof for an intended application. For example, the article may be configured to be installed in a gas turbine engine as a component thereof without undergoing a HIP process. However, a HIP process may optionally be performed on the article after the production thereof by the additive manufacturing process. Such HIP processes are well known in the art and will not be discussed herein. In certain examples, the article may be a turbine vane, turbine blade, or a turbine nozzle.

This manufacturing method yields a component with improved structural integrity, cosmetic appearance, functionality, metallurgical quality, and/or overall mechanical properties, including improved fatigue and creep life/strength, and improved manufacturing yield, enable improved development cycle times, reduce tooling costs without sacrificing component performance or durability, and permit internal configurations for components not otherwise possible with conventional fabrication techniques. The component may be formed entirely or partially from the build material.

Nonlimiting embodiments of the invention will now be described in reference to experimental investigations leading up to certain aspects of the invention. For the investigations discussed below, sample articles were produced from various build materials using an additive manufacturing process to compare the methods and build materials described herein to existing methods and build materials. More specifically, sample articles were produced from build materials comprising gas atomized metallic powders, alone or mixed with graphene powder, using a selective laser melting (SLM) process. Notably, the sample articles did not undergo a HIP process prior to analysis.

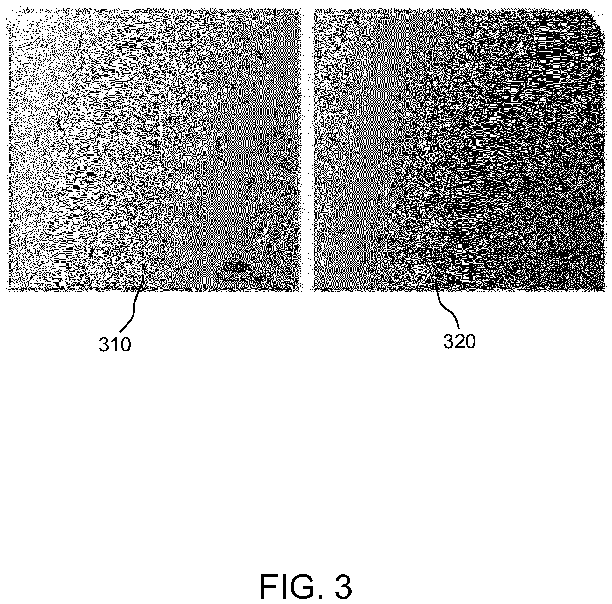

FIG. 3 shows optical images of surfaces of representative sample articles formed of an aluminum alloy powder (AlSi₇Mg (F357); labeled as "310") and a mixture of the aluminum alloy powder and a graphene powder (labeled as "320") having a ratio of the aluminum alloy powder to graphene powder of about 333:1. As clear from the images, addition of the graphene powder significantly reduced porosity of the resulting sample articles. Further analysis of the sample articles indicated that the addition of the graphene powder increased tensile strength by at least about 15%, increased strain by at least about 70%, increased fatigue life by at least about 1500 percent, and increased creep life by at least about 1500 percent.

Fatigue and creep tests were performed on sample articles formed a mixture of a nickel-based super alloy powder (Inconel^{®} 718) mixed and a graphene powder. The sample articles varied by the properties of particles in the graphene powders mixed therein, including variations of layers in the particles and the shape or structure of the particles. The measured fatigue life (cycles at a predetermined loading scheme and temperature) and rupture time (hours at a constant load and temperature) were compared to corresponding reference values for comparable articles formed solely of the nickel-based super alloy (Inconel^{®} 718) with a forging process, a metalworking process, and an additive manufacturing process with subsequent HIP. The tests showed that some of the sample articles had fatigue life and/or rupture life properties that were higher than the comparable forged articles, wrought articles, and/or additive manufactured with HIP articles. For the fatigue life tests, certain samples showed improvements over 1600 percent. For the creep life tests, certain samples showed improvements by over 700 percent.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of producing an article, the method comprising:
providing a build material comprising a powder mixture of about 95.0 wt.% to about 99.95 wt.% metallic powder and about 0.05 wt.% to about 5.0 wt.% graphene powder, wherein the graphene powder comprises nanoplatelets having between 1 and 30 layers of graphene; and
performing an additive manufacturing process to produce the article from the build material.

2. The method of claim 1, further comprising preparing the build material by:
mixing the metallic powder, the graphene powder, and a dispersing agent to form a powder mixture; and
drying the powder mixture to form the build material.

3. The method of claim 1, wherein the nanoplatelets have between 1 and 20 layers of graphene.

4. The method of claim 1, wherein the metallic powder comprises nickel, aluminum, iron, or alloys thereof.

5. The method of claim 1, wherein the graphene powder has a composition consisting essentially of:
about 92 wt.% to about 100 wt.% carbon;
up to about 8.0 wt.% oxygen;
up to about 0.2 wt.% sulfur;
up to about 0.2 wt.% nitrogen;
up to about 0.2 wt.% silicon; and
the balance incidental impurities.

6. The method of claim 1, wherein the build material has a substantially uniform distribution of the graphene powder therein.

7. The method of claim 1, wherein a hot isostatic pressing process is not performed on the article.

8. An article produced by a method comprising the steps of providing a build material comprising a powder mixture of about 95.0 wt.% to about 99.95 wt.% metallic powder and about 0.05 wt.% to about 5.0 wt.% graphene powder, wherein the graphene powder comprises nanoplatelets having between 1 and 30 layers of graphene, and performing an additive manufacturing process to produce the article from the build material.

9. The article of claim 8, wherein the article has a fatigue life and a rupture life greater than a first comparable article consisting of the metallic alloy and produced by a metalworking process or an additive manufacturing process that includes a subsequent hot isostatic pressing process and a second comparable article consisting of the metallic alloy and produced by a forging process.

10. The article of claim 8, wherein the metallic powder comprises nickel, aluminum, iron, or alloys thereof, wherein the graphene powder has a composition consisting essentially of:
about 92 wt.% to about 100 wt.% carbon;
up to about 8.0 wt.% oxygen;
up to about 0.2 wt.% sulfur;
up to about 0.2 wt.% nitrogen;
up to about 0.2 wt.% silicon; and
the balance incidental impurities.
